# EUROPÄISCHE PATENTSCHRIFT

(11) **EP 1 064 484 B1**
(45) Veröffentlichungstag und Bekanntmachung des Hinweises auf die Patenterteilung: **26.05.2004**
(21) Anmeldenummer: 99919093.7
(22) Anmeldetag: 17.03.1999
(51) Int. Cl.: F16K 31/04

(54) **ELEKTROMECHANISCHER STELLANTRIEB FÜR EIN VENTIL SOWIE DAMPFTURBINE**
ELECTROMECHANICAL ACTUATOR FOR A VALVE AND STEAM TURBINE
ACTIONNEUR ELECTROMECANIQUE POUR UNE SOUPAPE, ET TURBINE A VAPEUR

(30) Priorität: 23.03.1998 DE 19812674
(43) Veröffentlichungstag der Anmeldung: 03.01.2001
(73) Patentinhaber: SIEMENS AKTIENGESELLSCHAFT, 80333 München (DE)
(72) Erfinder: STEINBORN, Richard, D-51377 Leverkusen (DE)
(86) Internationale Anmeldenummer: PCT/DE1999/000740
(87) Internationale Veröffentlichungsnummer: WO 1999/049250

(56) Entgegenhaltungen:
- WO-A-98/13633
- DE-A- 3 606 722
- DE-A- 3 618 479
- DE-A- 3 706 621

## Beschreibung

Die Erfindung betrifft einen elektromechanischen Stellantrieb für ein Ventil einer Turbine, mit einer Schubstange zur Einstellung einer Öffnungsposition des Ventils und mit einem Elektromotor zum Antrieb der Schubstange. Die Erfindung betrifft weiterhin eine Dampfturbine mit einem Ventil und einem zugehörigen Stellantrieb.

Eine Turbine, insbesondere eine Dampfturbine, weist üblicherweise eine beträchtliche Anzahl von Ventilen auf, die beispielsweise als Frischdampf-, Abfang- oder Umleitventile sowie als Schnellschlußventile zum Einsatz kommen können. Die Öffnungsposition jedes dieser Ventile dient dabei zur Einstellung eines jeweiligen Material- oder Dampfstroms und ist z.B. über eine dem jeweiligen Ventil zugeordnete Schubstange einstellbar. Eine solche Schubstange ist Bestandteil eines dem Ventil zugeordneten Stellantriebs. An den Stellantrieb können dabei, insbesondere im Hinblick auf Stellkraft und Stellgeschwindigkeit, hohe Anforderungen gestellt werden. Für eine hohe Zuverlässigkeit des Ventils kann es beispielsweise erforderlich sein, daß der Stellantrieb eine Stellkraft von etwa 200 kN und eine Stellzeit von etwa 100 ms aufweist.

In der EP 0 040 732 A1 ist ein Stellantrieb für Dampfturbinenventile angegeben, der ein dezentrales Hydrauliksystem aufweist. Das Hydrauliksystem eines solchen Stellantriebes ist zu einem am Ventilgehäuse angeordneten kompakten Antriebsblock integriert, so daß für eine Energieversorgung des Stellantriebs lediglich noch ein Kabelsystem erforderlich ist. Durch die Verwendung von Öl als Hydraulikflüssigkeit könnte es unter extrem ungünstigen Umständen zu einem Entzünden des Öls und somit zu einem Brand in der Dampfturbine führen.

In der DE 44 46 605 A1 ist ein Ventil für eine Dampfturbine angegeben, welche eine Ventilspindel mit einem daran angeordneten Ventilkegel aufweist. Die Ventilspindel ist über einen Elektromotor angetrieben, welcher über eine elektromagnetisch betätigte Kupplung mit der Ventilspindel verbunden ist. Für einen automatischen Selbstschluß des Ventils umfaßt dieses ein Tellerfedersystem. Die elektromagnetische Kupplung ist mit einer Gewindebuchse verbunden, welche mit der drehfest geführten Ventilspindel zusammenarbeitet und so diese axial bewegt. Die Gewindebuchse ist als Kugelgewindebuchse ausgebildet, so daß sie spiel- und reibungsarm die Ventilspindel beaufschlagt. Aufgrund der drehfesten Führung der Ventilspindel, d.h. diese ist bei sich drehender Gewindebuchse lediglich axial auf- und abbewegbar, ist kein translatorisch wirksamer Antrieb erforderlich. Vielmehr genügt hierfür ein sich in zwei Richtungen drehender Elektromotor. Der Elektromotor muß allerdings über eine Drehmomentsicherung verfügen, um auf diese Weise zu verhindern, daß beispielsweise beim Schließen des Ventils der sich einendig an der Ventilspindel anschließende Ventilkegel sich beim Anlegen an den ihm zugeordneten Dichtsitz keinen Schaden nimmt bzw. den Dichtsitz beschädigt.

Aus der DE 36 18 479 A1 geht eine Armatur zum Absperren einer Strömung hervor, mit einem Gehäuse, in dem ein Verschlußstück mit Hilfe eines Gewindes zwischen der Auf- und Zu-Endstellung bewegbar ist, mit einem Drehantrieb (Antriebsmotor), der mit zeitlicher Verzögerung abgeschaltet wird. Zwischen dem Drehantrieb und dem Verschlußstück ist ein Getriebe mit zwei konzentrisch angeordneten Kugelumlaufspindeln angeordnet. Durch dieses Doppelspindel-System wird eine rein mechanische Einstellung eines Drehmomentes erzielt, wobei die Einstellung ohne großen Kraftaufwand mit entsprechend großer Drehzahl erfolgt.

Der Erfindung liegt mithin die Aufgabe zugrunde, einen Stellantrieb für ein Ventil einer Turbine, anzugeben, bei dem bei besonders geringer Brandgefahr ein störungsfreier Betrieb des Ventils gewährleistet ist. Eine weitere Aufgabe der Erfindung besteht darin, eine Dampfturbine mit geringem Risiko einer Störung des Betriebs durch einen Brand anzugeben.

Die auf einen Stellantrieb für ein Ventil einer Turbine gerichtete Aufgabe wird durch einen elektromechanischen Stellantrieb mit einer Schubstange zur Einstellung einer Öffnungsposition des Ventils, mit einem Elektromotor zum Antrieb der Schubstange gelöst, wobei die Schubstange und der Elektromotor über eine Übertragungsvorrichtung miteinander verbunden sind, durch welche Übertragungsvorrichtung je nach axialer Verschiebung der Schubstange ein sich änderndes Drehmoment erzeugbar ist.

Ein elektromechanischer Stellantrieb mit einer Übertragungsvorrichtung, durch die je nach Hub der Schubstange ein sich änderndes Drehmoment erzeugbar ist, ist besonders vorteilhaft bei solchen Ventilen, bei denen sich die auf die Schubstange auszuübende Kraft beim Schließen oder beim Öffnen des Ventils in Abhängigkeit des Hubes der Schubstange verändert. Dies kann bei Ventilen z.B. in einer Dampfturbine auftreten, bei denen anstehender Dampfdruck auf dem Ventilkegel steht und diesen beim Schließvorgang unterstützt bzw. den Ventilkegel geschlossen hält. Bei einem solchen Ventil ist anfangs eine große Kraft (Dampfdruck x wirksamer Ventilkegelfläche) zu überwinden, um die Ventile etwas zu öffnen. Sobald ein gewisser Öffnungsquerschnitt gegeben ist, erfolgt eine Druckentlastung, so daß beim weiteren Öffnungsvorgang jeweils eine geringere Kraft zur Verschiebung der Schubstange notwendig ist. Je nach Größe, Belastung und Anforderung an das Ventil, insbesondere den Öffnungs- und Schließvorgang (Schließgeschwindigkeit etc.), kann die Übertragungsvorrichtung entsprechend ausgelegt sein. Durch Verwendung eines Elektromotors ist zudem eine Brandgefahr gegenüber Stellantrieben mit einer Ölhydraulik deutlich verringert.

Der Elektromotor ist vorzugsweise als ein drehzahlgesteuerter Synchronmotor ausgebildet. Ein derartiger Synchronmotor erlaubt, insbesondere in Verbindung mit einem Servoverstärker, eine hochgenaue Stellungsregelung mit einer Regelgenauigkeit von etwa 0,1 mm bei einer Motorleistung bis zu etwa 30 kW. Der Servoverstärker wirkt dabei als Frequenzumformer und ermöglicht eine generelle oder positionsabhängige Reduktion des Motorstroms und der Motordrehzahl. Durch eine geeignete Anpassung der Betriebsparameter können dabei alle praktisch benötigten Antriebsleistungen und Antriebsstellgeschwindigkeiten erbracht werden.

Zur Umsetzung der Drehbewegung des Elektromotors in eine zum Antrieb der Schubstange vorgesehene Linearbewegung ist die Übertragungsvorrichtung vorzugsweise als ein Kurbelantrieb, ein Planetengetriebe oder ähnliches ausgeführt.

Durch einen Kurbelantrieb ist eine vorschubabhängige Drehmoment-Kraftübertragung möglich. Zudem kann bei einem schnellen Schließen des Ventils, wie es beispielsweise bei einem Schnellschluß eines Ventil in einer Turbine vorkommt, eine notwendige Endlagendämpfung bereits durch den Kurbelantrieb erzielt werden. Von zusätzlichen Einrichtungen zur Geschwindigkeitsverringerung während des letzten vom Ventilkegel (Dichtstück) in den Ventilsitz hinein kann mithin je nach Anforderung abgesehen werden. Ein Kurbelantrieb verfügt hierbei über ein Kurbelelement, insbesondere eine Kurbelscheibe, welches um eine Rotationsachse rotiert und an dem die Schubstange an einer Verbindungsstelle angreift, wobei die Verbindungsstelle von der Drehachse des Kurbelelementes (Kurbelscheibe) beabstandet ist. Bei einer Drehbewegung der Kurbelscheibe führt die damit verbundene Schubstange zwischen zwei maximalen Endpositionen entlang der Hauptachse der Schubstange eine lineare Bewegung aus. In diesen Endlagen ist über die Kurbelscheibe ein sehr hohes Drehmoment erzeugbar, da bei einer Drehung der Kurbelscheibe in Richtung der Schubachse in der jeweiligen Endlage nur ein sehr geringer linearer Weg zurückgelegt wird.

Vorzugsweise ist der Stellantrieb so ausgeführt, daß bei einem Erreichen einer Schließstellung des Ventils zwischen der Hauptachse der Schubstange und einer Verbindungslinie zwischen der Verbindungsstelle, an der die Schubstange an die Kurbelscheibe angreift, und der Rotationsachse ein Winkel im Bereich zwischen 5° und 20°, vorzugsweise etwa 10°, gebildet. Die Verbindungsstelle liegt somit in der Schließstellung des Ventils in der Nähe einer maximalen Endposition, so daß bei einer Drehung der Kurbelscheibe ein hohes Drehmoment und mithin eine hohe Kraft auf die Schubstange übertragbar ist. Somit ist durch den Stellantrieb ein besonders leichtes Öffnen des Ventils ermöglicht, ohne einen besonders leistungsstarken und/oder drehmoment-geregelten Elektromotor vorsehen zu müssen. Die Schubstange ist vorzugsweise mit einer Pleuelstange verbunden, die an der Verbindungsstelle, insbesondere einem fest mit der Kurbelscheibe verbundenen Hubzapfen, angreift. Die Pleuelstange ist in einer Ebene, in der die Hauptachse der Schubstange liegt, drehbeweglich mit der Schubstange und dem Hubzapfen verbunden.

Durch die Übertragungsvorrichtung, insbesondere den Kurbelantrieb, ist eine vorschubabhängige Drehmomenten-Kraftumwandlung auch bei Anwendungsfällen, bei denen zum Öffnen eines Ventils eine hohe Vorschubkraft von beispielsweise ca. 200 kN erforderlich ist, einfach realisierbar. Durch eine Veränderung des Kurbelradius (des Abstandes der Verbindungsstelle von der Rotationsachse) oder durch eine Verschiebung des Einsatzpunktes, d.h. der Position, die die Verbindungsstelle in der Schließposition des Ventils annimmt, kann die Kennlinie (Drehmomentkennlinie) des Kurbelantriebs an unterschiedliche Anforderungen angepaßt werden. Beispielsweise kann für ein Schnellschlußventil einer Dampfturbine die Wahl der Geometrie der Kurbelscheibe im Hinblick auf die Bereitstellung einer sehr hohen Kraft zum Öffnen des Ventils und die im Schnellschlußfall wirkende Rückstellkraft eines Federspeicherpaketes so erfolgen, daß eine möglichst hohe Beschleunigungskraft auf den Kurbelantrieb ausgeübt wird.

Ein Stellantrieb mit einer solchen Übertragungsvorrichtung bietet zudem den Vorteil, daß eine Endlagendämpfung bereits von der sich drehenden Kurbelscheibe übernommen werden kann. Dies ist in einem Schnellschlußfall von besonderer Bedeutung, da einerseits das Ventil mit einer mittleren Geschwindigkeit von z.B. 2 m/s schließen muß, andererseits der Ventilkegel nur mit einer Geschwindigkeit von z.B. 0,07 m/s auf den Ventilsitz aufsetzen darf. Ohne eine solche Endlagendämpfung würde nämlich der Ventilkegel annähernd ungebremst in den Ventilsitz fahren und könnte selbst beschädigt werden oder den Ventilsitz beschädigen.

Durch ein Federspeicherpaket (Rückstellfedersystem), welches in einem Schnellschlußfall eine gleichmäßige Schließgeschwindigkeit der Schubstange erzeugt, ist im Bereich der Endlage ein größerer Kurbelwinkel vorhanden, so daß die Kurbelscheibe in diesem Bereich weiter beschleunigt wird. Der größere Kurbelwinkel und die Beschleunigung an der Kurbelscheibe können mithin im Endlagenbereich hervorragend zur Endlagendämpfung genutzt werden.

Der Stellantrieb weist vorzugsweise eine elektromagnetische Zahnkupplung auf, die eine Kraftübertragung von dem Elektromotor auf die Schubstange, insbesondere auf die Übertragungsvorrichtung, gewährleistet. Vorzugsweise ist die elektromagnetische Kupplung eine formschlüssige Kupplung, bei der zwei Kupplungsteile formschlüssig ineinandergreifen und hierdurch ohne einen wesentlichen Anpreßdruck dieser beiden Kupplungsteile eine Kraft- und Drehmomentenübertragung stattfindet. Bei einer kraftschlüssigen Kupplung hingegen werden die beiden Kupplungsteile mit einem hohen Druck aneinandergepreßt, so daß hierdurch zum wesentlichen Teil ein Kraft- und Drehmomentübertrag stattfindet.

Durch die elektromagnetische Kupplung wird erreicht, daß im Schnellschlußfall die zu beschleunigenden Massen äußerst gering sind und hierdurch eine minimale Schließzeit erreicht wird. Bei einem Öffnen der Kupplung erfolgt mithin eine Trennung des Kurbelantriebs von dem Elektromotor und einem dem Elektromotor zugeordneten Rotationssystem, z.B. umfassend ein Getriebe und eine Antriebswelle für den Kurbelantrieb.

Die elektromagnetische Kupplung weist vorzugsweise zumindest drei voneinander unabhängige Spulensysteme (Erregerspulen) auf, wobei selbst bei Ausfall eines Spulensystems ein Öffnen sowie ein Geschlossenhalten der Zahnkupplung gewährleistet ist. Dieses System der unabhängig voneinander betriebenen Spulensysteme, bei dem bei Ausfall eines Spulensystems die Kupplung weiterhin funktionsfähig ist, wird als n - 1 von n - Sicherheitstechnik bezeichnet. Vorzugsweise hat die Kupplung drei voneinander unabhängige Spulensysteme und ist mithin in einer 2-von-3-Sicherheitstechnik ausgelegt. Um die Kupplung geschlossen zu halten, reicht hierbei die Kraft von zwei Spulen aus. Das Öffnen der Kupplung ist selbst dann noch möglich, wenn eine Spule die Kupplung weiter zusammenzieht und die beiden verbleibenden Spulen für ein Lösen der Kupplung geschaltet sind. Die Kupplung weist vorzugsweise ein Beabstandungselement, insbesondere eine Feder auf, welches in geöffnetem Zustand der Kupplung einen Eingriff der Kupplungsteile ineinander verhindert. Gegen dieses Beabstandungselement müssen die Spulensysteme beim Schließen der Kupplung wirken. Vorzugsweise ist die Kupplung hierbei so ausgeführt, daß alle drei Spulensysteme (alle n Spulensysteme) funktionieren müssen, um die Kupplung zu schließen.

Die Zahnkupplung weist vorzugsweise eine um eine Kupplungsachse drehbare Kupplungsscheibe auf, welche Kupplungsscheibe entlang der Kupplungsachse in Eingriff mit einer mit dem Elektromotor verbundenen Antriebswelle bringbar ist. Die Kupplungsachse fällt hierbei vorzugsweise mit der Rotationsachse der Übertragungsvorrichtung, des Kurbelantriebs, zusammen. Die Kupplung weist weiterhin eine Kupplungsnabe auf, wobei in einer Ausgestaltung die Kupplungsnabe unmittelbar formschlüssig mit der Kupplungsscheibe verbunden ist und eine Beabstandung der Kupplungsnabe über das Beabstandungsmittel, insbesondere eine Feder, von der Übertragungsvorrichtung verbunden ist. In einer anderen Ausgestaltung ist die Kupplungsscheibe mit der Kupplungsnabe über ein Beabstandungsmittel, insbesondere eine Feder, verbunden und entlang der Kupplungsachse mit der Kupplungsnabe in Eingriff bringbar. In beiden Fällen muß bei Öffnen und Schließen der Kupplung jeweils nur eine geringe Masse bewegt werden, um eine Trennung des Elektromotors von der Übertragungsvorrichtung zu erreichen.

Der Stellantrieb weist vorzugsweise ein Rückstellfedersystem auf, welches mit der Schubstange verbunden ist und eine Kraft auf die Schubstange in Richtung der Schließposition des Ventils ausübt. Insbesondere in einem Schnellschlußfall wird über das Rückstellfedersystem ein Schließen des Ventils durch eine Ausübung einer entsprechenden Kraft auf die Schubtstange erreicht.

Vorzugsweise ist die Zahnkupplung durch ein Kupplungslager so gelagert, daß bei einem Ausrücken der Zahnkupplung allenfalls eine geringe Kraft aufzubringen ist. Weiter bevorzugt umfaßt dabei das Kupplungslager ein Kugelgelenk. Die Kupplungsscheibe ist in besonders bevorzugter Ausgestaltung von mindestens einer, in dem Kugelgelenk gelagerten Haltestange gehaltert. Durch diese Ausgestaltung der Zahnkupplung ist diese schon durch eine geringe Kraft ausrückbar. Insbesondere kommt es nicht durch eine hohe Haftreibung zu einem Verhaken der Zahnkupplung, wodurch ein Ausrücken der Zahnkupplung verhindert werden könnte.

Die auf eine Dampfturbine gerichtete Aufgabe wird durch eine solche Dampfturbine gelöst, die zum Einstellen eines Dampfstromes ein Stellventil aufweist, wobei das Stellventil über einen oben näher beschriebenen Stellantrieb geöffnet und geschlossen werden kann.

Die mit der Erfindung erzielten Vorteile bestehen insbesondere darin, daß durch den zum Antrieb der Schubstange vorgesehenen Elektromotor ein druckölfreier Betrieb des Stellantriebes ermöglicht ist. Damit ist beim Einsatz in einer Dampfturbine die Brandgefahr besonders gering. Zudem ist der Stellantrieb in einer beliebigen Einbaulage installierbar, und kann insbesondere ohne großen Aufwand als Ersatz für einen Stellantrieb mit dezentraler Hydraulikversorgung verwendet werden. Der Elektromotor ist mittels einer geeigneten Ansteuerung auf besonders einfache Weise an verschiedenartige Anforderungen anpaßbar, so daß der Stellantrieb besonders flexibel ist. Die Übertragungsvorrichtung, insbesondere der Kurbelantrieb, ist ebenfalls in einfacher Weise an die verschiedenartigen Anforderungen anpaßbar. Die Komponenten des Stellantriebs, insbesondere der Elektromotor und die elektromagnetische Zahnkupplung, sind mit einfachen Mitteln ausführbar und somit besonders wartungsfreundlich.

Die Erfindung wird anhand eines in der Zeichnung näher erläuterten Ausführungsbeispiels beschrieben. Die Zeichnung ist teilweise schematisch und nicht maßstäblich ausgeführt und umfaßt der Übersichtlichkeit halber und zum Verständnis lediglich die für die Erläuterung wichtigen Komponenten eines Stellantriebs und einer Dampfturbine. Es zeigen:
- FIG 1 und 2: einen Längsschnitt durch einen jeweils schematisch dargestellten Stellantrieb mit einem Ventil,
- FIG 3: einen Ausschnitt eines Schnittes durch eine Hochdruck-Dampfturbine mit zwei Regelventilen und
- FIG 4: einen Längsschnitt durch eine Zahnkupplung,
- FIG 5: eine Aufsicht auf die Zahnkupplung 40 der Figur 4.

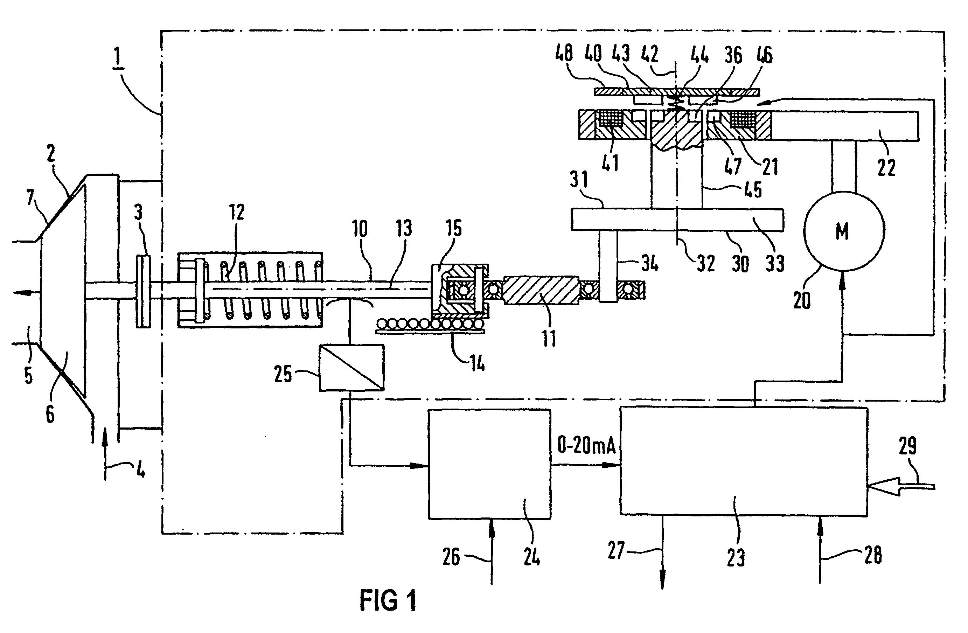

In Figur 1 ist ein Dampfventil 2 in einer Schließstellung mit einer Dampfeinströmung 4, einer Dampfausströmung 5 und einem dazwischen angeordneten Ventilsitz 7 dargestellt. In dem Ventilsitz 7 liegt ein Dichtstück 6, ein Ventilkegel 6 an, welcher das Ventil 2 verschließt. Der Ventilkegel 6 weist ein Ventilanschlußstück 3 auf, an dem ein Stellantrieb 1 angeschlossen ist. Der Stellantrieb 1 weist eine entlang einer Hauptachse 13 sich erstreckende Schubstange 10 auf, die mit einem Rückstellfedersystem 12 verbunden ist. Die Schubstange 10 ist einerseits mit dem Ventilanschlußstück 3 und andererseits formschlüssig mit einem Kreuzkopf 15 verbunden. Der Kreuzkopf 15 steht mit einer Linearführung 14 in Eingriff, so daß die Schubstange 10 lediglich eine lineare Bewegung entlang ihrer Hauptachse 13 durchführen kann. An dem Kreuzkopf 15 ist eine Pleuelstange 11 so angeordnet, daß sie in einer Ebene, in der die Hauptachse 13 der Schubstange 10 liegt, drehbar ist. Die Pleuelstange 11 ist ebenfalls in dieser Ebene drehbar mit einem Hubzapfen 34 einer Übertragungsvorrichtung 30 verbunden. Die Übertragungsvorrichtung 30 weist einen Kurbelantrieb 31, eine Kurbelwelle, auf. Die Kurbelwelle 31 besitzt eine Kurbelscheibe 33, welche um eine Rotationsachse 32 in der Ebene der Schubstange 10 drehbar ist. Der Hubzapfen 34 ist gegenüber der Rotationsachse 32 beabstandet und formschlüssig mit der Kurbelscheibe 33 verbunden. Er stellt mithin eine Verbindungsstelle 34 zwischen der Kurbelscheibe 33 und der Schubstange 10 dar. Die Kurbelscheibe 33 ist mit einer sich entlang der Rotationsachse 32 erstrekkenden Kupplungsnabe 45 fest und formschlüssig verbunden. In Richtung der Rotationsachse 32 schließt sich an die Übertragungsvorrichtung 30 eine Zahnkupplung 40 an. Die Zahnkupplung 40 weist eine um die Kupplungsachse 42 (die Rotationsachse 32) drehbare Kupplungsscheibe 43 auf. Die Kupplungsscheibe 43 ist über ein Beabstandungsmittel 44, insbesondere eine Tellerfeder, mit der Kupplungsnabe 45 verbunden. An dem der Kupplungsscheibe 43 zugewandten Ende weist die Kupplungsnabe 45 ein Reaktionszahnrad 36 in Umfangsrichtung auf. Dieses Reaktionszahnrad 36 ist von einer als Hohlwelle ausgebildeten Antriebswelle 21 umgeben. Die Antriebswelle 21 weist dem Reaktionszahnrad 36 gegenüberliegend ein Aktionszahnrad 47 auf. In Richtung der Rotationsachse 32, dem Reaktionszahnrad 36 und dem Aktionszahnrad 47 gegenüberliegend weist die Kupplungsscheibe 43 eine Kupplungsscheibenverzahnung 46 auf. Diese Kupplungsscheibenverzahnung 46 ist sowohl für einen Eingriff in das Aktionszahnrad 47 als auch das Reaktionszahnrad 36 ausgebildet. Die Antriebswelle 21 weist drei Spulensysteme 41 (Erregerspulen) auf, die jeweils aus zwei um einen Winkel von 180° voneinander beabstandeten Erregerspulen besteht. In Richtung der Rotationsachse 32 den Spulensystemen 41 gegenüberliegend weist die Kupplungsscheibe 43 einen magnetischen Rückschluß 48 auf, durch welchen bei Anlegung eines elektrischen Stroms an die Spulensysteme 41 eine Axialverschiebung der Kupplungsscheibe 43 gegen die Rückstellkraft des Beabstandungsmittels 44 mit einem Eingriff der Kupplungsscheibenverzahnung 46 in das Aktionszahnrad 47 und das Reaktionszahnrad 36 erfolgt. An die Antriebswelle 21 ist ein Mehrstufengetriebe 22 angeschlossen, welches mit einem Elektromotor 20 in Verbindung steht. Die Lagerung der drehbaren Teile, insbesondere der Antriebswelle 21 und der Kupplungsnabe 45, erfolgte vorzugsweise mittels Gleitlager.

An der Schubstange 10 greift ein Meßumformer 25 an, welcher der Positions- und Geschwindigkeitsbestimmung der Schubstange 10 bzw. Ventilspindel dient. Meßwerte des Meßumformers 25 sind einem Öffnungsregler 24 zuführbar. Dem Öffnungsregler 24 sind weiterhin Reglersignale 26 zuführbar. Der Öffnungsregler 24 steht in Verbindung mit einem Servoverstärker 23. Der Servoverstärker 23 dient der Ansteuerung des Motors 20 sowie den Spulensystemen 41. Der Servoverstärker 23 ist vorzugsweise als ein Frequenzumformer ausgeführt. Er wird durch eine batteriegepufferte Stromversorgung 29 mit elektrischem Strom versorgt. Ihm sind über einen Eingang 28 Signale zur Auslösung eines Schnellschlusses sowie bei einem Lastabwurf zuführbar. über einen Ausgang 27 können von dem Servoverstärker 23 unterschiedliche Regler-Störsignale abgenommen werden.

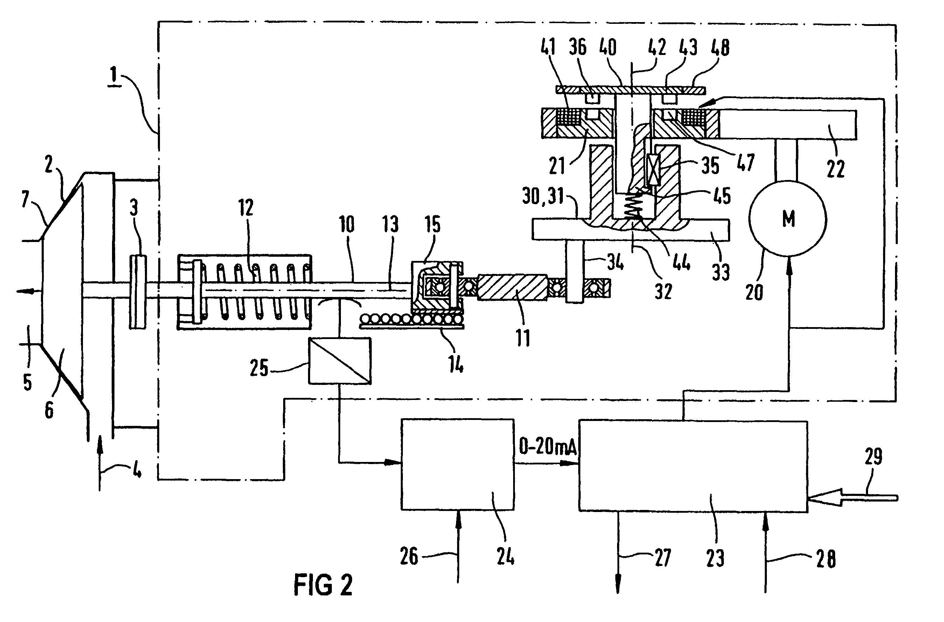

In Figur 2 ist ebenfalls ein Stellantrieb 1 analog zu dem Stellantrieb 1 gemäß Figur 1 dargestellt. Diese unterscheiden sich in dem dargestellten Ausführungsbeispiel lediglich durch die Ausgestaltung der Kupplung 40 und der Verbindung der Kupplung 40 zu dem Kurbelantrieb 31. Hinsichtlich der Beschreibung des Ventils, der Schubstange, des Elektromotors sowie weiterer Elemente des Stellantriebs sei auf die Erläuterungen zu Figur 1 verwiesen. Gemäß Figur 2 ist die Kupplungsnabe 45 formschlüssig mit der Kupplungsscheibe 43 fest verbunden. Die Kupplungsnabe 45 ist über ein Beabstandungsmittel 44, insbesondere eine Tellerfeder, mit der Kurbelscheibe 33 verbunden. Die Tellerfeder 44 ist so ausgelegt, daß sie die Kupplung 40 offenhält, d.h. die Kupplungsscheibe 43 axial von der Antriebswelle 21 beabstandet hält, so daß die Kupplung 40 offen bleibt. An der Kupplungsnabe 45 ist eine axiale Kerbverzahnung 35 mit dem Kurbelantrieb 31 vorgesehen. Hierdurch erfolgt die Umsetzung einer Drehbewegung der Kupplungsscheibe 43 in eine Drehbewegung der Kurbelscheibe 33. In der Antriebswelle 21 ist wiederum axial von der Kupplungsscheibe 43 beabstandet ein Aktionszahnrad 47 vorgesehen. Diesem Aktionszahnrad 47 axial gegenüberliegend weist die Kupplungsscheibe 43 ein Reaktionszahnrad 36 auf, welches für einen formschlüssigen Eingriff in das Aktionszahnrad 47 ausgebildet ist.

Bei einer Öffnungsansteuerung des Ventils wird die Rotationsbewegung der nicht näher dargestellten Welle des Elektromotors 20 über eine Drehmomentwandlung des Mehrstufengetriebes 23 auf die hohle Antriebswelle 21 übertragen. Letztere ist über die elektromagnetische Kupplung 40 mit der Kurbelscheibe 33 verbunden. Auf der Kurbelscheibe 33 sitzt aus der Rotationsachse 32 versetzt (Kurbelradius) der Hubzapfen 34. Durch eine Rotation der Kurbelscheibe 33 wird über den formschlüssig mit der Schubstange 10 verbundenen Kreuzkopf 15 über die Pleuelstange 11 eine Linearbewegung der Schubstange 10 erzeugt. Die Schubstange 10 wird hierbei bereits in der Schließstellung des Ventils 2 durch die Rückstellkraft des Rückstellfedersystems 12, welches als Ventiltellerfeder-Speicherpaket ausgeführt ist, belastet. Bei einer Öffnungsbewegung des Stellantriebs 1 wird das Rückstellfedersystem 12 weiter gespannt und erreicht in der Öffnungsstellung des Ventils 2 seine maximale Rückstellkraft.

Für einen Schnellschluß des Ventils 2 werden die Spulensysteme 41 stromlos geschaltet (Ruhestromprinzip). Die Einleitung eines Schnellschlusses erfolgt beispielsweise bei einer Turbinenschnellabschaltung, bei einer Lastabschaltung aus Eigenbedarf, bei einer Lastabschaltung auf Nenndrehzahl der zugeordneten Turbine sowie bei einem Ausfall der Stromversorgung. Durch ein Abschalten der Spulensysteme 41 entfällt die magnetische Anziehungskraft zwischen dem Spulensystem 41 und der Kupplungsscheibe 43, wodurch die elektromagnetische Kupplung 40 aufgrund der Rückstellkraft das Beabstandungsmittel 44 öffnet. Hierdurch ist die Antriebswelle 21 mit dem anhängenden Mehrstufengetriebe 22 und dem Elektromotor 20 von dem Kurbelantrieb 31 getrennt. Somit ist das Drehmoment des Elektromotors 20 nicht mehr gegen die Rückstellkraft des Rückstellfedersystems 12 wirksam. Das Ventil 2 geht somit mit einer schnellen Stellzeit von beispielsweise 100 ms in seine Schließposition.

Bei dem in Figur 1 beschriebenen Ausführungsbeispiel wird hierbei lediglich die geringe Masse der Kupplungsscheibe axial bewegt. Gemäß der Ausführungsform nach Figur 2 mit einer einfachen Kupplungsverzahnung, bei der das Aktionszahnrad 47 dem Reaktionszahnrad 36 direkt gegenüber angeordnet ist, ist zusätzlich die Kupplungsnabe 45 in axialer Richtung zu bewegen. In beiden Ausführungsfällen ist der Abstand zwischen der Verzahnung der Kupplungsscheibe 46 bzw. 36 von der Verzahnung der Antriebswelle (Aktionszahnrad 47) so bemessen, daß ein ungehindertes Gegeneinanderdrehen ermöglicht ist. Gleiches gilt für die radiale Beabstandung zwischen Kupplungsnabe 45 und der diese umgebenden Antriebswelle 21. Ein Schließen der Kupplung 40 erfolgt durch eine Beaufschlagung der Spulensysteme 41 mit einem elektrischen Strom, wodurch eine magnetische Anziehungskraft von den Spulensystemen 41 auf den magnetischen Rückschluß 48 der Kupplungsscheibe 43 ausgeübt wird, und somit die Kupplung 40 in die Antriebswelle 21 eingreift. Bei Eingriff der Kupplungsscheibe 43 in die Antriebswelle 21 sind die entsprechenden Zahnräder 36, 46 und 47 entsprechend der gewählten Ausführungsform formschlüssig miteinander verbunden. Hierdurch erfolgt eine formschlüssige Drehmomentübertragung zwischen den entsprechenden Zahnrädern 36, 46 und 47. Die Zahnflanken sind hierbei vorzugsweise einsatzgehärtet und geschliffen. Bei einem formschlüssigen Eingriff der jeweiligen Zahnräder ineinander, insbesondere bei einer maximalen Öffnung des Ventils 2, ergibt sich ein Flächenpressung an den Zahnflanken, wodurch eine Haftreibung entsteht, die einem Öffnen der Kupplung 40 entgegenwirkt, insbesondere dann, wenn eine Schmierung der Kupplung 40 durch Öl erfolgt. Liegt eine geschmierte Haftreibung vor, mit einem Reibwert von etwa µ = 0,1 zwischen den Zahnflanken, so sind die Zahnflanken mit einem Winkel von etwa 11,5° abgeschrägt, um die Reibwiderstände einfach überwinden zu können.

Vorzugsweise sind drei zweigeteilte Spulensysteme 41 vorgesehen, wobei jedes Spulensystem 41 zwei um 180° auf der Antriebswelle 21 versetzt angeordnete Erregerspulen aufweist. Die Spulensysteme 41 sind nach einer Zwei-von-Drei-Sicherheitstechnik ausgelegt, wodurch sichergestellt ist, daß die elektromagnetische Kraft von zwei Spulen ausreichend ist, um die Kupplung gegen die Rückstellkraft des Beabstandungsmittels 44 (Tellerfeder) geschlossen zu halten. Für ein Schließen der Kupplung müssen alle drei Spulensysteme 41 funktionsfähig sein. Für ein Öffnen der Kupplung 40 reicht die Funktionsfähigkeit von zwei Spulensystemen 41 aus, so daß ein Spulensystem 41 durchaus noch in stromführendem Zustand sein kann und trotzdem die Kupplung 40 geöffnet wird. Bei einem Versagen der Stromunterbrechung einer Erregerspule 41, so daß diese selbst im Schnellschlußfall Strom führt, öffnet die Kupplung 40 trotzdem. Hierdurch ist die Verfügbarkeit sowie die Öffnungssicherheit der Kupplung 40 erhöht.

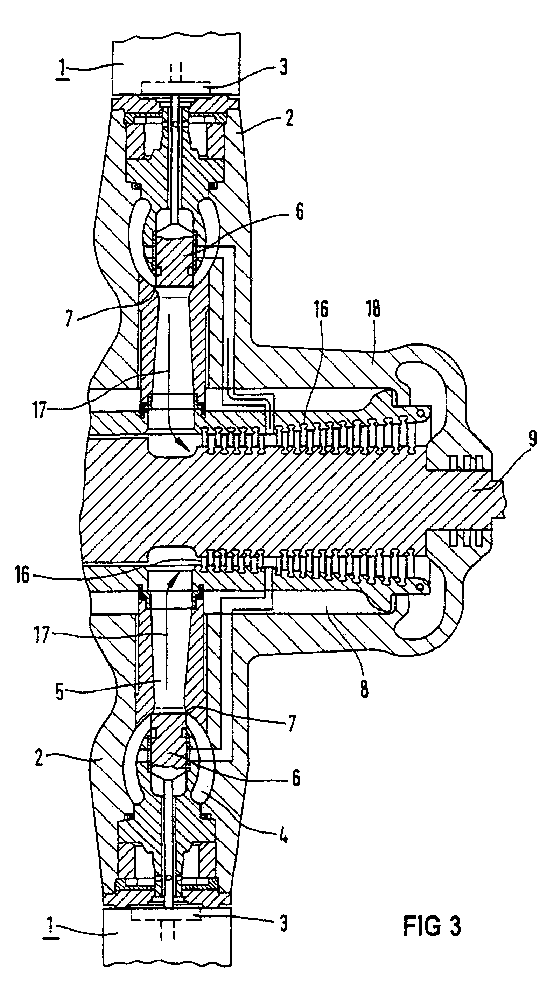

In Figur 3 ist ein Horizontalschnitt durch eine Hochdruckdampfturbine 8 dargestellt. Die Dampfturbine 8 weist zwei einander gegenüberliegend angeordnete Stellventile 2 auf. An jedes Stellventil 2 ist jeweils ein Stellantrieb 1, wie in Figuren 1 oder 2 beschrieben, angeschlossen. Das Stellventil 2 weist ein Ventilanschlußstück 3 für den Stellantrieb 1, eine Dampfeinströmung 4, eine Dampfausströmung 5, einen Ventilkegel 6 und einen zugehörigen Ventilsitz 7 auf. Die Dampfturbine 8 weist eine Turbinenwelle 9 und ein diese umgebendes Gehäuse 18 auf. An dem Gehäuse 18 sowie an der Turbinenwelle 9 ist die Turbinenbeschaufelung 16 angeordnet. Während des Betriebes der Dampfturbine 8 gelangt Dampf 17 durch die Stellventile 2 in die Dampfturbine 8 hinein und treibt über die Beschaufelung 16 die Turbinenwelle 9 an. Die Stellventile 2 können hierbei als Regelventile und/oder kombinierte Regelund Schnellschlußventile ausgeführt sein.

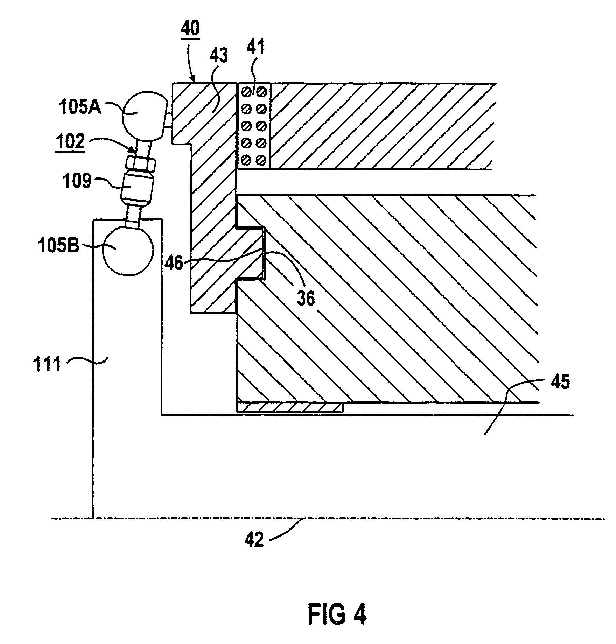

Figur 4 zeigt in einem Längsschnitt eine weitere Ausgestaltung der Zahnkupplung 40. Die Kupplungsnabe (45) ist von einem scheibenartigen Ansatz 111 abgeschlossen. Dieser scheibenartige Ansatz 111 ist mit einer Haltestange 109 mit der Kupplungsscheibe 43 verbunden. Die Haltestange 109 ist in einem ersten Kugelgelenk 105B mit dem scheibenartigen Ansatz 111 verbunden. Die Haltestange 109 ist an ihrem anderen Ende mit einem zweiten Kugelgelenk 105A mit der Kupplungssscheibe 43 verbunden. Mit dieser Ausgestaltung kann auf die axiale Kerbverzahnung 35 der Figur 2 verzichtet werden. Die Drehmomentübertragung auf die Übertragungsvorrichtung 30 erfolgt über die Haltestangen 109. Durch die Lagerung in Kugelgelenken tritt für eine axiale Bewegung entlang der Kupplungsachse 42 nahezu keine Haftreibung auf. Die Zahnkupplung 40 ist somit schon durch eine geringe Kraft ausrückbar. Dies verhindert ein blockieren der Ausrückung der Zahnkupplung 40 durch hohe Reibungskräfte. Damit wird die Betriebssicherheit weiter gesteigert.

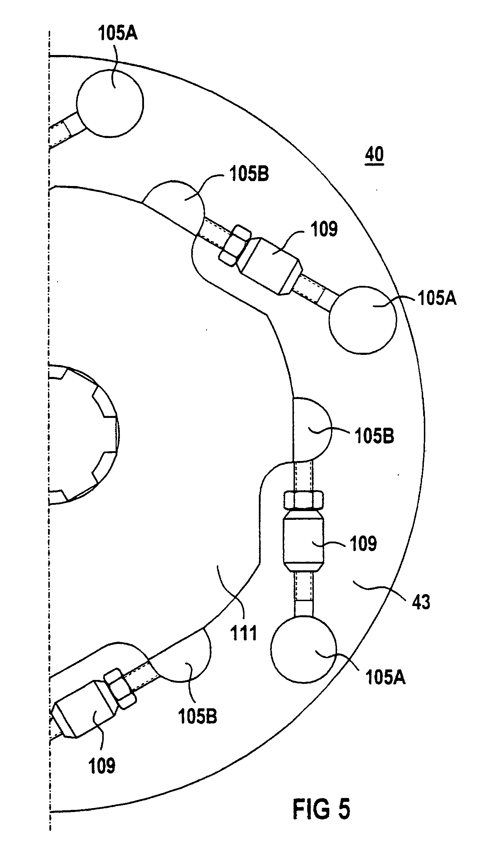

Figur 5 zeigt eine Aufsicht auf die Zahnkupplung 40 der Figur 4. Man erkennt eine sägeblattartige Ausbildung des scheibenartigen Ansatzes 111. Dies gewährleistet, daß die Haltestangen 109 bei einer Drehung frei beweglich bleiben.

## Patentansprüche

1. Elektromechanischer Stellantrieb (1) für ein Ventil (2) einer Turbine, mit einer Schubstange (10) zur Einstellung einer Öffnungsposition des Ventils (2), mit einem Elektromotor (20) zum Antrieb der Schubstange (10), wobei Schubstange (10) und Elektromotor (20) über eine Übertragungsvorrichtung (30) verbunden sind, durch welche Übertragungsvorrichtung (30) je nach axialer Verschiebung der Schubstange (10) ein sich änderndes Drehmoment erzeugbar ist.

2. Stellantrieb (1) nach Anspruch 1, bei dem die Übertragungsvorrichtung (30) ein Planetengetriebe aufweist.

3. Stellantrieb (1) nach Anspruch 1, bei dem die Übertragungsvorrichtung (30) einen Kurbelantrieb (31) aufweist.

4. Stellantrieb (1) nach Anspruch 3, bei dem der Kurbelantrieb (31) eine um eine Rotationsachse (32) drehbare Kurbelscheibe (33) aufweist, wobei die Schubstange (10), z. B. über eine Pleuelstange (11), an einer von der Rotationsachse (32) beabstandeten Verbindungsstelle (34) an der Kurbelscheibe (33) angreift.

5. Stellantrieb (1) nach Anspruch 4, bei dem bei Erreichen einer Schließstellung des Ventils (2) ausgehend von der Rotationsachse (32) zwischen der Verbindungsstelle (34) und der Hauptachse (13) ein Winkel im Bereich zwischen 5° und 20°, vorzugsweise etwa 10°, gebildet ist.

6. Stellantrieb (1) nach einem der vorhergehenden Ansprüche, bei dem zwischen Übertragungsvorrichtung (30) und Elektromotor (20) eine elektromagnetische Zahnkupplung (40) vorgesehen ist.

7. Stellantrieb(1) nach Anspruch 6, bei dem die elektromagnetische Zahnkupplung (40) zumindest drei voneinander unabhängige Spulensysteme (41) aufweist, wobei selbst bei Ausfall eines Spulensystems (41) ein Öffnen sowie ein Geschlossenhalten der Zahnkupplung (40) gewährleistet ist.

8. Stellantrieb (1) nach Anspruch 6 oder 7, bei dem die Zahnkupplung (40) eine um eine Kupplungsachse (42) drehbare Kupplungsscheibe (43) aufweist, welche Kupplungsscheibe (43) entlang der Kupplungsachse (42) in Eingriff mit einer mit dem Elektromotor (20) verbundenen Antriebswelle (21) bringbar ist.

9. Stellantrieb (1) nach Anspruch 8, bei dem die Kupplungsscheibe (43) durch ein Beabstandungsmittel (44), insbesondere eine Feder, mit einer Kupplungsnabe (45) verbunden und entlang der Kupplungsachse (42) mit der Kupplungsnabe (45) in Eingriff bringbar ist.

10. Stellantrieb (1) nach Anspruch 8, bei der die Kupplungsscheibe (43) formschlüssig mit einer Kupplungsnabe (45) verbunden ist, welche Kupplungsnabe (45) durch ein Beabstandunsgmittel (44), insbesondere eine Feder, mit der Übertragungsvorrichtung (30) verbunden ist.

11. Stellantrieb (1) nach einem der vorhergehenden Ansprüche, bei dem an der Schubstange (10) ein Rückstellfedersystem (12) angeordnet ist.

12. Stellantrieb (1) nach einem der Ansprüche 6 bis 11, bei dem die Zahnkupplung (40) durch ein Kupplungslager (102) so gelagert ist, daß bei einem Ausrücken der Zahnkupplung (40) allenfalls eine geringe Kraft aufzubringen ist.

13. Stellantrieb nach Anspruch 12, bei dem das Kupplungslager (102) ein Kugelgelenk (105) umfaßt.

14. Stellantrieb (1) nach Anspruch 8 und 14, bei dem die Kupplungsscheibe (43) von mindestens einer, in dem Kugelgelenk (105) gelagerten Haltestange (109) gehaltert ist.

15. Dampfturbine mit einem Stellventil (2) zum Einstellen eines Dampfstromes, für das ein Stellantrieb (1) nach einem der vorhergehenden Ansprüche vorgesehen ist.

## Claims

1. Electromechanical actuating drive (1) for a valve (2) of a turbine, with a push rod (10) for setting an opening position of the valve (2), and with an electric motor (20) for driving the push rod (10), the push rod (10) and the electric motor (20) being connected via a transmission device (30), by means of which a changing torque can be generated, depending on the axial displacement of the push rod (10).

2. Actuating drive (1) according to Claim 1, wherein the transmission device (30) has a planetary gear.

3. Actuating drive (1) according to Claim 1, wherein the transmission device (30) has a crank mechanism (31).

4. Actuating drive (1) according to Claim 3, wherein the crank mechanism (31) has a crank disc (33) rotatable about an axis of rotation (32), the push rod (10) engaging on the crank disc (33), for example via a connecting rod (11), at a connection point (34) at a distance from the axis of rotation (32).

5. Actuating drive (1) according to Claim 4, wherein, when a closing position of the valve (2) is reached, starting from the axis of rotation (32), an angle in the range of between 5° and 20°, preferably about 10°, is formed between the connection point (34) and the main axis (13).

6. Actuating drive (1) according to one of the preceding claims, wherein an electromagnetic denture clutch (40) is provided between the transmission device (30) and the electric motor (20).

7. Actuating drive (1) according to Claim 6, wherein the electromagnetic denture clutch (40) has at least three coil systems (41) independent of one another, and, even if one coil system (41) fails, it is ensured that the denture clutch (40) is opened and also is kept closed.

8. Actuating drive (1) according to Claim 6 or 7, wherein the denture clutch (40) has a clutch disc (43) which is rotatable about a clutch axis (42) and which can be brought along the clutch axis (42) into engagement with a drive shaft (21) connected to the electric motor (20).

9. Actuating drive (1) according to Claim 8, wherein the clutch disc (43) is connected to a clutch hub (45) by a spacer means (44), in particular a spring, and can be brought along the clutch axis (42) into engagement with the clutch hub (45).

10. Actuating drive (1) according to Claim 8, wherein the clutch disc (43) is connected positively to a clutch hub (45) which is connected to the transmission device (30) by a spacer means (44), in particular a spring.

11. Actuating drive (1) according to one of the preceding claims, wherein a return spring system (12) is arranged on the push rod (10).

12. Actuating drive (1) according to one of Claims 6 to 11, wherein the denture clutch (40) is mounted by means of a clutch bearing (102) in such a way that at most a slight force has to be applied in order to disengage the denture clutch (40).

13. Actuating drive according to Claim 12, wherein the clutch bearing (102) comprises a ball joint (105).

14. Actuating drive (1) according to Claim 8 and 14, wherein the clutch disc (43) is held by at least one holding rod (109) mounted in the ball joint (105).

15. Steam turbine with an actuating valve (2) for setting a steam stream, for which valve an actuating drive (1) according to one of the preceding claims is provided.

## Revendications

1. Actionneur électromécanique (1) pour une soupape (2) d'une turbine, comprenant une tige de poussée (10) pour régler la position d'ouverture de la soupape (2), comprenant également un moteur électrique (20) destiné à entraîner la tige de poussée (10), la tige de poussée (10) et le moteur électrique (20) étant reliés par l'intermédiaire d'un dispositif de transmission (30), ce dispositif de transmission (30) permettant, suivant le déplacement axial de la tige de poussée (10), de produire un couple qui varie

2. Actionneur (1) selon la revendication 1, dans lequel le dispositif de transmission (30) comprend un train épicycloïdal.

3. Actionneur (1) selon la revendication 1, dans lequel le dispositif de transmission (30) comprend un entraînement à manivelle (31).

4. Actionneur (1) selon la revendication 3, dans lequel l'entraînement à manivelle (31) comprend un disque de manivelle (33) pouvant tourner autour d'un axe de rotation (32), la tige de poussée (10) coopérant, par exemple par l'intermédiaire d'une bielle (11), avec le disque de manivelle (33), en un point de liaison (34) éloigné de l'axe de rotation (32).

5. Actionneur (1) selon la revendication 4, dans lequel, lorsque l'on atteint une position de fermeture de la soupape (2), à partir de l'axe de rotation (32) est formé, entre le point de liaison (34) et l'axe principal (13), un angle entre 5° et 20°, de préférence d'environ 10°.

6. Actionneur (1) selon l'une des revendications précédentes, dans lequel entre le dispositif de transmission (30) et le moteur électrique (20) est prévu un embrayage à crabots (40) électromagnétique.

7. Actionneur (1) selon la revendication 6, dans lequel l'embrayage à crabots (40) électromagnétique comprend au moins trois systèmes de bobines (41) indépendants les uns des autres, une ouverture et un maintien fermé de l'embrayage à crabots (40) étant garanti même en cas de défaillance d'un système de bobines (41).

8. Actionneur (1) selon la revendication 6 ou 7, dans lequel l'embrayage à crabots (40) comprend un disque d'embrayage (43) rotatif autour d'un axe d'embrayage (42), ce disque d'embrayage (43) pouvant être amené en prise, le long de l'axe d'embrayage (42), avec un arbre d'entraînement (21) relié au moteur électrique (20).

9. Actionneur (1) selon la revendication 8, dans lequel le disque d'embrayage (43) est relié par un moyen d'écartement (44), notamment un ressort, à un moyeu d'embrayage (45), et peut être amené en prise, le long de l'axe d'embrayage (42), avec le moyeu d'embrayage (45).

10. Actionneur (1) selon la revendication 8, dans lequel le disque d'embrayage (43) est relié par complémentarité de forme à un moyeu d'embrayage (45), ce moyeu d'embrayage (45) étant relié par l'intermédiaire d'un moyen d'écartement (44), notamment un ressort, au dispositif de transmission (30).

11. Actionneur (1) selon l'une des revendications précédentes, dans lequel sur la tige de poussée (10) est agencé un système de ressort de rappel (12).

12. Actionneur (1) selon l'une des revendications 6 à 11, dans lequel l'embrayage à crabots (40) est monté par un palier d'embrayage (102) de façon telle, que lors d'un débrayage de l'embrayage à crabots (40), il ne soit nécessaire dans tous les cas d'appliquer qu'une faible force.

13. Actionneur (1) selon la revendication 12, dans lequel le palier d'embrayage (102) comprend une articulation à rotule (105).

14. Actionneur (1) selon les revendications 8 et 14, dans lequel le disque d'embrayage (43) est supporté par au moins une tige de support (109) montée dans l'articulation à rotule (105).

15. Turbine à vapeur comprenant une soupape de réglage (2) destinée à régler un écoulement de vapeur et pour laquelle est prévu un actionneur (1) selon l'une des revendications précédentes.
